# EUROPEAN PATENT APPLICATION

(11) **EP 4 697 389 A1**
(43) Date of publication of application: **18.02.2026**
(21) Application number: 24886382.1
(22) Date of filing: 01.11.2024
(51) Int. Cl.: H01M 4/04, G01L 19/00, B65G 65/00, B65G 65/32

(54) **ELECTRODE SHEET MANUFACTURING APPARATUS**

(30) Priority: 01.11.2023 KR 20230149006; 31.10.2024 KR 20240153001
(71) Applicant: LG Energy Solution, Ltd., Seoul 07335 (KR)
(72) Inventor: LIM, Dong Hun, Daejeon 34122 (KR); HWANG, Koo Youn, Daejeon 34122 (KR); CHO, Won Hak, Daejeon 34122 (KR); CHA, Myeong Geun, Daejeon 34122 (KR); JEONG, Yun Hyeock, Daejeon 34122 (KR)
(74) Representative: Goddar, Heinz J.
(86) International application number: PCT/KR2024/017101
(87) International publication number: WO 2025/095712

(57) **Abstract**

The present disclosure relates to an electrode sheet manufacturing device, and the electrode sheet manufacturing device according to one aspect of the present disclosure may include a pressing roller capable of manufacturing an electrode sheet by pressing powder; a hopper configured to supply powder accommodated therein toward the pressing roller and having at least one measuring hole; and a measuring unit configured to measure pressure inside the hopper by injecting a predetermined fluid into the measuring hole in order to measure the amount of powder accommodated in the hopper.

## Description

### TECHNICAL FIELD

### CROSS-REFERENCE TO RELATED APPLICATIONS

The present application claims priority to Korean Patent Application No. 10-2023-0149006 filed on November 1, 2023 and Korean Patent Application No. 10-2024-0153001 filed on October 31, 2024 in the Republic of Korea, the disclosures of which are incorporated herein by reference.

### TECHNICAL FIELD

The present disclosure relates to an electrode sheet manufacturing device, and more specifically, to an electrode sheet manufacturing device that manufactures an electrode sheet by rolling powder.

### BACKGROUND ART

In general, secondary batteries have been applied to small-sized applications such as mobile devices or laptop computers, but recently, the research direction has been expanded to medium and large-sized applications, and they are widely used in applications requiring high power output mainly in relation to energy storage systems (ESSs) or electric vehicles (EVs). A secondary battery accommodates an electrode assembly in which multiple electrodes are stacked or wound. At this time, an electrode is manufactured by cutting an electrode sheet into a predetermined length or shape. One method for manufacturing such an electrode sheet is to roll a powder or powder-like substance to manufacture an electrode sheet in the form of a film or sheet having a predetermined thickness. At this time, the powder may be a slurry in which an electrode active material, a binder, a conductive material, and the like are mixed.

In general, a pair of pressing rollers and a hopper are used to manufacture an electrode sheet with powder. Here, the pressing rollers roll the powder into a sheet or film-like object, and the hopper supplies the powder accommodated therein between the pressing rollers. At this time, in the conventional electrode sheet manufacturing device, a screw-structured agitator is placed inside the hopper to smoothly supply the powder between the pressing rollers, and the powder is stirred using the agitator.

Meanwhile, in order to stably manufacture the electrode sheet, it is important that an appropriate amount of powder is accommodated in the hopper and that the powder is heated to an appropriate temperature. This is because if the amount of powder accommodated in the hopper is out of the appropriate range, the powder may be excessively rolled or under-rolled, resulting in uneven or poor quality electrode sheets being manufactured. To this end, in the conventional electrode sheet manufacturing device, the amount of powder accommodated in the hopper is indirectly measured by utilizing the characteristic that the more the amount of powder accommodated in the hopper, the greater the load applied to the agitator.

However, as the powder accommodated in the hopper is locally lumped together during the stirring process by the agitator, there is a problem that the powder is not smoothly supplied between the pressing rollers or defects occur in the electrode sheet being manufactured. Furthermore, a method of measuring the amount of powder accommodated in the hopper using the load applied to the agitator has an inaccurate problem as the amount of powder is not directly measured. This is because the fluctuation in the load applied to the agitator may be caused not only by the amount of powder accommodated in the hopper but also by other causes.

Accordingly, there has been an urgent need for the development of an electrode sheet manufacturing device capable of stably manufacturing the electrode sheet by accurately measuring the amount of powder accommodated in the hopper while minimizing the impact on the powder accommodated in the hopper. Additionally, there is an urgent need for the development of an electrode sheet manufacturing device capable of heating the powder to an appropriate temperature while minimizing the impact on the powder accommodated in the hopper.

### SUMMARY

### Technical Problem

The present disclosure is designed to solve the problems of the related art, and therefore the present disclosure is directed to providing an electrode sheet manufacturing device capable of stably manufacturing an electrode sheet by measuring the amount of powder accommodated in a hopper while minimizing the impact on the powder accommodated in the hopper.

The present disclosure is also directed to providing an electrode sheet manufacturing device capable of stably manufacturing an electrode sheet by accurately measuring the amount of powder accommodated in the hopper.

The present disclosure is still also directed to providing an electrode sheet manufacturing device capable of heating the powder accommodated in the hopper to an appropriate temperature.

However, technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is disclosed an electrode sheet manufacturing device including a pressing roller capable of manufacturing an electrode sheet by pressing powder; a hopper configured to supply powder accommodated therein toward the pressing roller and having at least one measuring hole; and a measuring unit configured to measure pressure inside the hopper by injecting a predetermined fluid into the measuring hole in order to measure the amount of powder accommodated in the hopper.

At this time, the predetermined fluid may be external air of the hopper.

At this time, the measuring unit may include a flow path forming member having one side connected to the measuring hole; and a pressure sensor that measures pressure of a fluid flowing through the flow path forming member.

At this time, the measuring hole may be formed through the hopper to allow the inside and the outside of the hopper to communicate with each other.

At this time, at least a portion of the measuring unit may be installed on an outer surface of the hopper.

At this time, the measuring hole may include a first measuring hole and a second measuring hole spaced apart from each other.

At this time, the pressing rollers may be configured as a pair, wherein one of the first measuring hole and the second measuring hole may be positioned between the pair of pressing rollers, and the other of the first measuring hole and the second measuring hole may be disposed at a predetermined distance from the pair of pressing rollers.

At this time, the electrode sheet manufacturing device may further include a powder supply unit that supplies powder to the hopper; and a controller that controls the powder supply unit based on information obtained by the measuring unit.

At this time, the electrode sheet manufacturing device may further include a controller that controls operation of the pressing roller based on information obtained by the measuring unit.

At this time, the controller may be configured to change an operating state of the pressing roller when the amount of powder accommodated in the hopper is less than a reference amount, and an inner peripheral surface of the hopper may include a first region in contact with the reference amount of powder accommodated inside the hopper; and a second region located on the opposite side of the pair of pressing rollers based on the first region, wherein at least one of the measuring holes may be located in the first region.

At this time, at least one of the measuring holes may be formed at a position where it may be blocked by the reference amount of powder accommodated inside the hopper.

At this time, at least one of the measuring holes may be located adjacent to a boundary between the first region and the second region.

At this time, the pressing rollers may be configured as a pair, and when the amount of powder accommodated in the hopper is less than the reference amount, the controller may stop the operation of the pressing rollers, increase a distance between the pair of pressing rollers, or lower the pressure at which the pressing rollers press the powder.

At this time, the fluid injected into the hopper by the measuring unit may be a heating fluid heated to 80 degrees or higher.

At this time, the hopper may be provided with a receiving space for accommodating powder, and an internal flow path extending in a peripheral direction of the receiving space may be provided inside the hopper to allow a predetermined fluid to flow, wherein a portion of the heating fluid may be configured to be injected into the hopper by the measuring unit, and a remaining portion of the heating fluid may be configured to be supplied to the internal flow path.

At this time, the hopper may be provided with a receiving space for accommodating powder, and an internal flow path extending in a peripheral direction of the receiving space may be provided inside the hopper to allow a predetermined fluid to flow, wherein the heating flow path may be configured to be supplied with a heating fluid heated to 80 degrees or higher.

At this time, the internal flow path may be composed of a plurality of internal flow paths.

At this time, the plurality of internal flow paths may extend side by side with each other along the peripheral direction of the receiving space.

At this time, the measuring unit may be configured to inject at least a portion of the heating fluid discharged from the internal flow path into the measuring hole.

At this time, the electrode sheet manufacturing device may further include a heating fluid supply unit for supplying the heating fluid.

### ADVANTAGEOUS EFFECTS

The electrode sheet manufacturing device according to one aspect of the present disclosure is configured such that the measuring unit measures the amount of powder accommodated in the hopper using the measuring hole provided in the hopper accommodating the powder, so that the amount of powder accommodated in the hopper may be measured while minimizing the impact on the powder accommodated in the hopper.

Alternatively, in the electrode sheet manufacturing device according to one aspect of the present disclosure, a measuring unit for measuring the amount of powder accommodated in the hopper is provided on the outer surface or outside of the hopper, so that the amount of powder accommodated in the hopper may be measured while minimizing the impact on the powder accommodated in the hopper.

Through this, the electrode sheet manufacturing device according to one aspect of the present disclosure may stably manufacture an electrode sheet based on information about the amount of powder accommodated in the hopper.

The electrode sheet manufacturing device according to one aspect of the present disclosure includes a first measuring hole and a second measuring hole in which measuring holes provided in the hopper are disposed to be spaced apart from each other, so that the amount of powder accommodated in the hopper may be measured more accurately by using the relative positions and pressure difference thereof.

In the electrode sheet manufacturing device according to one aspect of the present disclosure, a measuring hole is positioned in the first region of the inner peripheral surface of the hopper or positioned adjacent to a boundary between the first region and the second region, so that the amount of powder accommodated in the hopper may be compared with a reference amount.

Through this, the electrode sheet manufacturing device according to one aspect of the present disclosure may stably manufacture an electrode sheet based on the comparison result of the amount of powder accommodated in the hopper and the reference amount.

The electrode sheet manufacturing device according to one aspect of the present disclosure has a controller, and thus information about the amount of powder accommodated in the hopper may be used to control the powder supply unit capable of supplying powder to the hopper or the actuator that operates the pressing roller, so that an electrode sheet may be manufactured more stably.

In the electrode sheet manufacturing device according to one aspect of the present disclosure, a fluid injected into a measuring hole may be composed of a heating fluid heated to a predetermined temperature, so that the powder accommodated in the hopper may be appropriately heated.

In the electrode sheet manufacturing device according to one aspect of the present disclosure, an internal flow path through which a heating fluid heated to a predetermined temperature may flow is provided inside the hopper, so that the powder accommodated in the hopper may be appropriately heated.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a view schematically showing a process in which an electrode sheet manufacturing device according to the first embodiment of the present disclosure manufactures an electrode sheet. For the description of the present disclosure, a supply unit, a hopper, and pressing rollers are shown in cross-section.
FIG. 2 is a perspective view of a hopper and pressing rollers of an electrode sheet manufacturing device according to the first embodiment of the present disclosure as viewed from above.
FIG. 3 is a vertical cross-sectional view of a hopper, pressing rollers, and a measuring unit of an electrode sheet manufacturing device according to the first embodiment of the present disclosure being cut so that measuring holes are visible. For the description of the present disclosure, pumps of the measuring unit are shown schematically.
FIG. 4 is a view for describing a process in which a controller of an electrode sheet manufacturing device according to the first embodiment of the present disclosure controls a supply unit and pressing rollers. For the description of the present disclosure, a supply unit, a hopper, and pressing rollers are shown in cross-section.
FIG. 5 is a vertical cross-sectional view of a hopper, pressing rollers, and a measuring unit of an electrode sheet manufacturing device according to the second embodiment of the present disclosure being cut so that measuring holes are visible. For the description of the present disclosure, pumps of the measuring unit are shown schematically.
FIG. 6 is a perspective view of a hopper and pressing rollers of an electrode sheet manufacturing device according to the third embodiment of the present disclosure as viewed from above.
FIG. 7 is a view schematically showing an electrode sheet manufacturing device according to the third embodiment of the present disclosure.
FIG. 8 is a view schematically showing an electrode sheet manufacturing device according to the fourth embodiment of the present disclosure.
FIG. 9 is a view schematically showing an electrode sheet manufacturing device according to the fourth embodiment of the present disclosure.

### DETAILED DESCRIPTION

Preferred embodiments of the present disclosure will be described in detail to enable those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

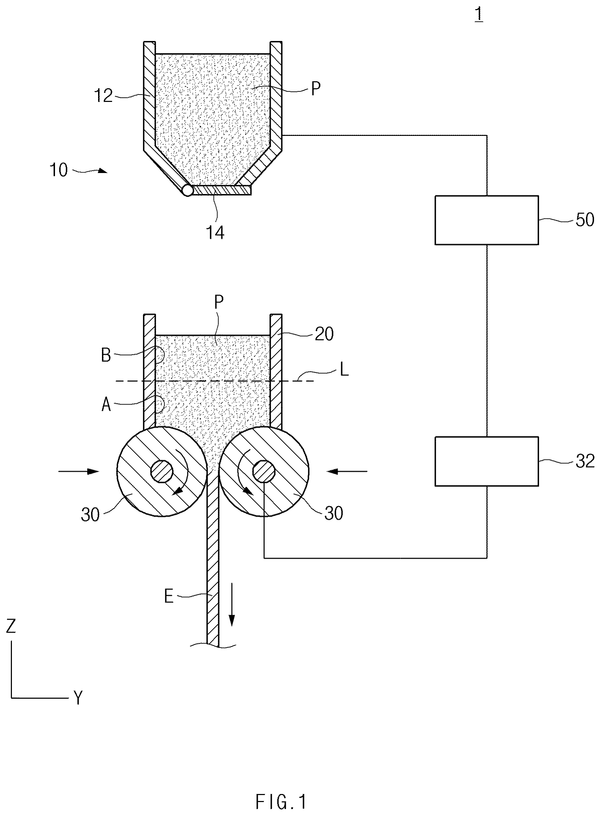

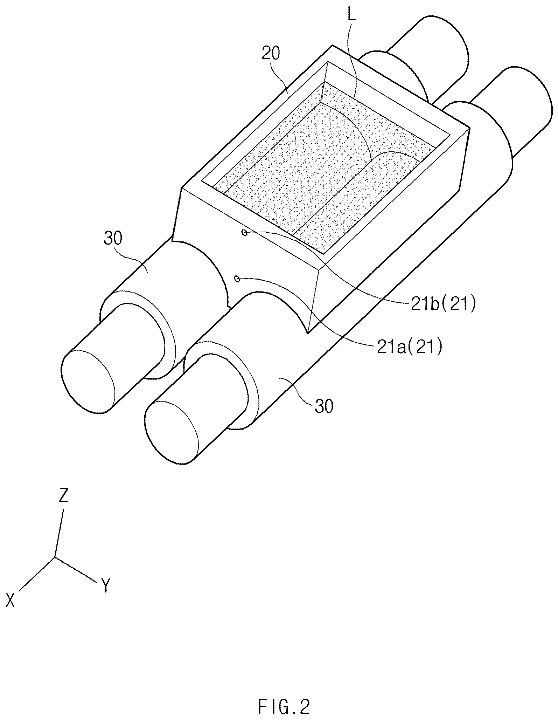

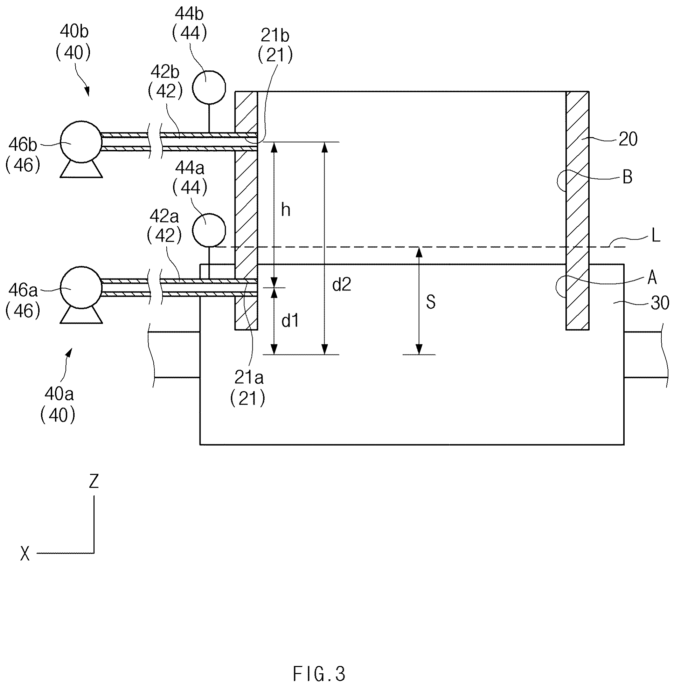

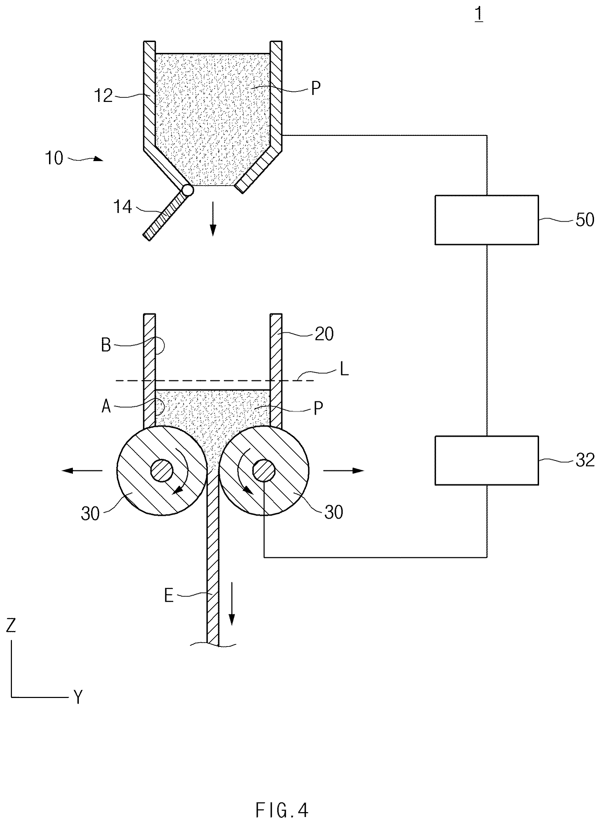

FIG. 1 is a view schematically showing a process in which an electrode sheet manufacturing device according to the first embodiment of the present disclosure manufactures an electrode sheet. For the description of the present disclosure, a supply unit, a hopper, and pressing rollers are shown in cross-section. FIG. 2 is a perspective view of a hopper and pressing rollers of an electrode sheet manufacturing device according to the first embodiment of the present disclosure as viewed from above. FIG. 3 is a vertical cross-sectional view of a hopper, pressing rollers, and a measuring unit of an electrode sheet manufacturing device according to the first embodiment of the present disclosure being cut so that measuring holes are visible. For the description of the present disclosure, pumps of the measuring unit are shown schematically. FIG. 4 is a view for describing a process in which a controller of an electrode sheet manufacturing device according to the first embodiment of the present disclosure controls a supply unit and pressing rollers. For the description of the present disclosure, a supply unit, a hopper, and pressing rollers are shown in cross-section.

At this time, each component of the electrode sheet manufacturing device according to the first embodiment of the present disclosure is schematically shown in the drawing, and the size of the component, the thickness of the line, and the like may be somewhat exaggerated for convenience of understanding.

FIGS. 1 to 4 disclose an electrode sheet manufacturing device 1 (hereinafter referred to as a manufacturing device) according to the first embodiment of the present disclosure. The manufacturing device 1 according to the first embodiment of the present disclosure is a device for manufacturing an electrode sheet E by rolling a powder P.

In this embodiment, the powder P may be a slurry in which a powder-type electrode active material, a binder, a conductive material, and the like are mixed, but is not limited thereto, and the powder P may be made of various materials capable of forming the electrode sheet E.

Referring to FIG. 1, the manufacturing device 1 according to the first embodiment of the present disclosure may include a powder supply unit 10. In this embodiment, the powder supply unit 10 may be a unit for supplying the powder P to a hopper 20 to be described later.

In this embodiment, the powder supply unit 10 may include a tank-shaped receiving portion 12 that accommodates the powder P therein and has an outlet at the bottom, and an opening/closing portion 14 that opens and closes the outlet to control the amount of powder P discharged from the receiving portion 12. The operation of the opening/closing portion 14 may be controlled by a controller 50 to be described later.

Meanwhile, the powder supply unit 10 is not particularly limited in structure or type as long as it may supply the powder P into the hopper 20. For example, the powder supply unit 10 may be formed of a conveyor for supplying the powder P.

Referring to FIGS. 1 to 3, the manufacturing device 1 according to the first embodiment of the present disclosure may include a hopper 20 and a pair of pressing rollers 30. In this embodiment, the hopper 20 may be a structure that supplies the powder P between the pair of pressing rollers 30.

And, the pair of pressing rollers 30 may be rollers that press the powder P entering the gap formed therebetween to manufacture a sheet-like electrode. At this time, the gap between the pressing rollers 30 may mean the narrowest gap formed between the pressing rollers 30. In the gap, the highest pressure within the hopper 20 may be formed by the pressing rollers 30.

In this embodiment, the hopper 20 may have a housing shape to accommodate the powder P therein. And, the hopper 20 may be spaced apart from the lower side of the powder supply unit 10.

At this time, the hopper 20 may be open at an upper side so as to receive the powder P falling by gravity from the powder supply unit 10. Of course, when the hopper 20 and the powder supply unit 10 are connected by a pipe or the like, the hopper 20 may not have a separate open surface.

Meanwhile, in this embodiment, the hopper 20 may be provided with a size sufficient to accommodate the powder P having a reference amount or more therein. At this time, the reference amount may be an amount of powder preset for a predetermined purpose.

For example, the reference amount may be a minimum amount of powder P that should be accommodated in the hopper 20 in order for the electrode sheet E to be stably manufactured by the pair of pressing rollers 30.

If the pressing roller 30 operates while the powder P with the minimum amount or less is accommodated in the hopper 20, a sufficient amount of powder P may not be supplied between the pressing rollers 30, thereby causing the pressing rollers 30 to collide with each other or manufacturing a defective electrode sheet E.

To prevent this, the manufacturing device 1 according to the first embodiment of the present disclosure includes a measuring unit 40 and a controller 50 to control the operation of the powder supply unit 10 or the pressing roller 30, which will be described later.

Referring to FIGS. 1 to 3 again, an inner peripheral surface of the hopper 20 in this embodiment may include a first region A and a second region B. At this time, the first region A may be a region that is in contact with the powder P when a reference amount of powder P is accommodated in the hopper 20.

And, the second region B may be a region of the inner peripheral surface located on the opposite side of the pressing rollers 30 based on the first region A. In other words, the second region B may be a region that is not in contact with the powder P (or is located at a distance) when a reference amount of powder P is accommodated in the hopper 20.

In this embodiment, as the powder P accommodated in the hopper 20 is filled from the bottom of the hopper 20 by gravity and supplied to the pressing rollers 30, the second region B is located on top of the first region A. However, the relative positions of the first region A and the second region B may be appropriately changed depending on the shape of the hopper 20 or the method in which the powder P is supplied to the pressing rollers 30.

At this time, a boundary L may be provided between the first region A and the second region B. The boundary L may be expressed as an imaginary line where the surface (or water surface) of the powder P and the inner peripheral surface of the hopper 20 meet each other when a reference amount of powder P is accommodated in the hopper 20.

In this embodiment, the boundary L may be spaced upward from the gap of the pressing rollers 30 by a reference distance (s), as shown in FIG. 4. This may be because the powder P is supplied to the pressing rollers 30 as it begins to be filled from the bottom of the hopper 20, as previously described.

In this embodiment, the fact that the powder P is accommodated in the hopper 20 beyond the boundary L may mean that a larger amount of powder P than the reference amount is accommodated in the hopper 20. Conversely, the fact that the powder P is accommodated in the hopper 20 in an amount that does not reach the boundary L may mean that a smaller amount of powder P than the reference amount is accommodated in the hopper 20. This information may be used to control the operation of the powder supply unit 10 or the pressing rollers 30.

Meanwhile, referring to FIGS. 3 and 4 again, the hopper 20 may be provided with at least one measuring hole 21. In this embodiment, the measuring hole 21 is a hole for measuring the pressure inside the hopper 20. The measuring hole 21 may be formed through the hopper 20 so that the inside and the outside of the hopper 20 may communicate with each other.

In this embodiment, the measuring hole 21 may include a first measuring hole 21a and a second measuring hole 21b. And, the first measuring hole 21a and the second measuring hole 21b may be disposed at a predetermined distance from each other.

At this time, the positions of the first measuring hole 21a and the second measuring hole 21b may be adjusted so that the amount of powder P accommodated in the hopper 20 may be measured more accurately. This will be described later together with the measuring unit 40.

Referring to FIGS. 1 to 3 again, a pair of pressing rollers 30 may be disposed at the lower side of the hopper 20. Accordingly, the powder P accommodated inside the hopper 20 is moved downward by gravity and may be naturally supplied between the pair of pressing rollers 30. Of course, the hopper 20 may be provided with a screw (not shown) or the like for assisting in the supply of the powder P between the pressing rollers 30.

Meanwhile, at least one of the pair of pressing rollers 30 may be operatively connected to an actuator 32. For example, the actuator 32 may be formed of an electric motor. And, the actuator 32 and the pressing roller 30 may be connected by predetermined power transmission members.

By means of such an actuator 32, the pressing roller 30 may be operated, a force where the pressing roller 30 presses the powder P may be adjusted, or the gap between the pressing rollers 30 may be adjusted. The actuator 32 may be controlled by a controller 50 to be described later.

Meanwhile, referring to FIG. 4, the manufacturing device 1 according to the first embodiment of the present disclosure may include a measuring unit 40 that measures the pressure inside the hopper 20 using the measuring hole 21.

In this embodiment, the measuring unit 40 may include a flow path forming member 42 formed in the measuring hole 21, a pump 44 capable of injecting a predetermined fluid into the flow path forming member 42, and a pressure measuring sensor 46 for measuring the pressure of the fluid flowing through the flow path forming member 42.

If the measuring hole 21 is blocked by the powder P accommodated in the hopper 20, a relatively high pressure will be measured by the pressure sensor 46. Conversely, if the measuring hole 21 is not blocked, a relatively low pressure will be measured by the pressure sensor 46.

Through this, information on the amount of powder P accommodated in the hopper 20 may be indirectly obtained. Furthermore, in the process of measuring the amount of powder P, the impact on the powder P accommodated in the hopper 20 may be minimized.

At this time, at least one of the flow path forming member 42, the pump 44, and the measuring sensor 46 may be installed on the outer surface of the hopper 20 or may be positioned on the outer side the hopper 20. Through this, the measuring unit 40 may measure the amount of powder P without affecting the amount or condition of the powder P accommodated inside the hopper 20.

Meanwhile, the fluid injected into the flow path forming member 42 by the pump 44 may be external air. Since the external air may be easily supplied from the external environment without any physical and/or chemical effect on the powder P accommodated in the hopper 20, this measuring unit 40 may be configured simply and compactly. Of course, the injected fluid may be composed of different types of fluid or mixture other than air.

In this embodiment, the measuring unit 40 may include a first measuring unit 40a using the first measuring hole 21a and a second measuring unit 40b using the second measuring hole 21b.

And, the first measuring unit 40a may include a first flow path forming member 42a, a first pump 44a, and a first pressure sensor 46a, and the second measuring unit 40b may include a second flow path forming member 42b, a second pump 44b, and a second pressure sensor 46a.

At this time, since the first measuring hole 21a and the second measuring hole 21b are located at different positions, the first measuring unit 40a and the second measuring unit 40b may each measure the pressure in different parts inside the hopper 20.

And, as previously described, the positions of the first measuring hole 21a and the second measuring hole 21b may be adjusted so as to more accurately measure the amount of powder P accommodated in the hopper 20.

As an example, the first measuring hole 21a may be positioned relatively closer to the gap of the pressing rollers 30 than the second measuring hole 21b. In other words, the first measuring hole 21a may be spaced upward from the gap of the pressing rollers 30 by a first distance d1, and the second measuring hole 21b may be spaced upward from the gap of the pressing rollers 30 by a second distance d2 longer than the first distance d1.

As another example, the first measuring hole 21a and the second measuring hole 21b may be disposed with a predetermined height difference (h) in the direction of gravity (Z-axis direction). At this time, the first measuring hole 21a may be positioned relatively lower, and the second measuring hole 21b may be positioned relatively upper.

As still another example, the first measuring hole 21a may be positioned between the pair of pressing rollers 30, and the second measuring hole 21b may be disposed at a predetermined distance from the pair of pressing rollers 30. As shown, the second measuring hole 21b may be spaced apart from the pressing rollers 30 by a second distance d2. At this time, the second distance d2 may be greater than the radius of the pressing roller 30.

Generally, the powder P accommodated in the hopper 20 has a higher pressure toward the gap side of the pressing roller 30. Therefore, according to this embodiment, the amount of powder P accommodated in the hopper 20 may be indirectly measured based on the relative positions of the first measuring hole 21a and the second measuring hole 21b and the difference between the pressure measured by the first measuring unit 40a and the pressure measured by the second measuring unit 40b.

At this time, the second measuring hole 21b may be sufficiently spaced apart from the first measuring hole 21a enough to measure the pressure of a space with no powder P within the hopper 20. For example, the second measuring hole 21b may be spaced apart enough to measure atmospheric pressure.

This may be to more accurately measure the amount of powder P based on the difference between the atmospheric pressure measured in the second measuring unit 40b and the pressure of the powder P measured in the first measuring unit 40a.

As still another example, the first measuring hole 21a may be formed in the first region A of the hopper 20, and the second measuring hole 21b may be formed in the second region B of the hopper 20. Through this, the amount of powder P accommodated in the hopper 20 may be determined based on the reference amount.

For example, if the pressure of the powder P is measured in both the first and second measuring holes 21a, 21b, it may be determined that the amount of powder P accommodated in the hopper 20 is greater than the reference amount. Alternatively, if atmospheric pressure is measured in both the first and second measuring holes 21a, 21b, it may be determined that the amount of powder P accommodated in the hopper 20 is less than the reference amount. Alternatively, if the pressure by the powder P is measured in the first measuring hole 21a and atmospheric pressure is measured in the second measuring hole 21b, it may be determined that the difference between the amount of powder P accommodated and the reference amount is within a predetermined range.

Meanwhile, the above-described methods are only examples of methods for determining the amount of powder P accommodated according to the positions of the first and second measuring holes 21a, 21b, and the method for determining the amount of powder P accommodated based on the positions of the first and second measuring holes 21a, 21b may be appropriately modified as necessary.

Meanwhile, referring to FIGS. 1 and 4, the manufacturing device 1 according to the first embodiment of the present disclosure may include a controller 50. The controller 50 may be configured to control the powder supply unit 10 and the pressing roller 30.

To this end, the controller 50 may be composed of an electric circuity, a processor, a central processing unit (CPU), a controller, an arithmetic logic unit, an operational logic circuit, a digital signal processing device, a microcomputer, an FPGA, a system on a chip (SoC), a programmable logic unit, a microprocessor, or any device capable of performing the functions described below.

At this time, the controller 50 may be configured to control the powder supply unit 10 and the actuator 32 of the pressing roller 30 based on information about the amount of powder P obtained using the measuring unit 40.

First, the controller 50 may indirectly calculate information about the amount of powder P accommodated in the hopper 20 based on information obtained from the measuring unit 40. At this time, the method where the controller 50 calculates the amount of powder P may be any one of the exemplary methods described above.

And, as shown in FIG. 1, the controller 50 may control the actuator 32 to maintain the operating state of the pressing roller 30 if the difference between the amount of powder P accommodated in the hopper 20 and the reference amount is greater than or equal to a predetermined range.

At this time, the operating state of the pressing roller 30 may be a factor that may affect the manufacture of the electrode sheet E, such as the size of the gap between the pair of pressing rollers 30, the pressure at which the pressing roller 30 presses the powder P, the rotation speed of the pressing roller 30, and the like.

Alternatively, the controller 50 may control the actuator 32 to change the operating state of the pressing roller 30 if the difference between the amount of powder P accommodated in the hopper 20 and the reference amount is within a predetermined range, as shown in FIG. 4.

For example, the controller 50 may increase the size of the gap between a pair of pressing rollers 30, lower the pressure at which the pressing rollers 30 press the powder P, lower the rotation speed of the pressing rollers 30, or stop the rotation of the pressing rollers.

Alternatively, the controller 50 may control the powder supply unit 10 to supply the powder P to the hopper 20 if the difference between the amount of the powder P accommodated in the hopper 20 and the reference amount is within a predetermined range, as shown in FIG. 4. Accordingly, the difference between the amount of powder P accommodated in the hopper 20 and the reference amount may be increased to a predetermined range or more.

Through this, the manufacturing device 1 according to the first embodiment of the present disclosure may accurately measure the amount of powder P accommodated in the hopper 20 while minimizing the impact on the powder P, and may stably manufacture the electrode sheet E based on this.

Hereinafter, a manufacturing device according to another embodiment of the present disclosure will be described.

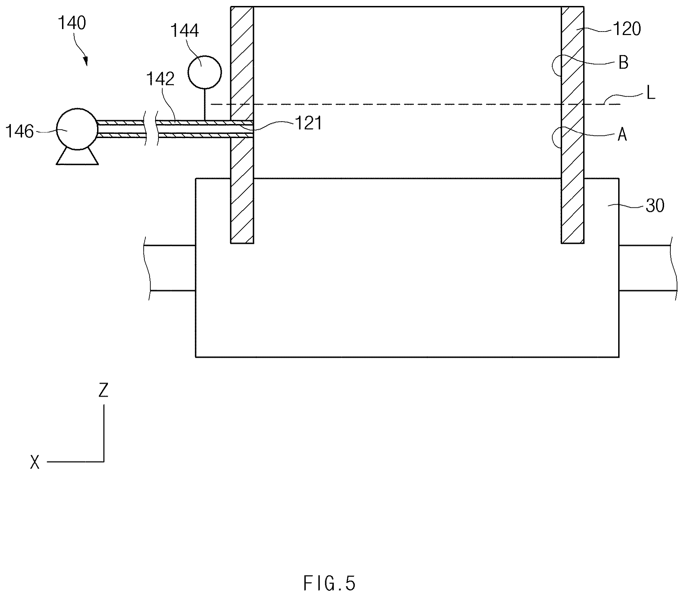

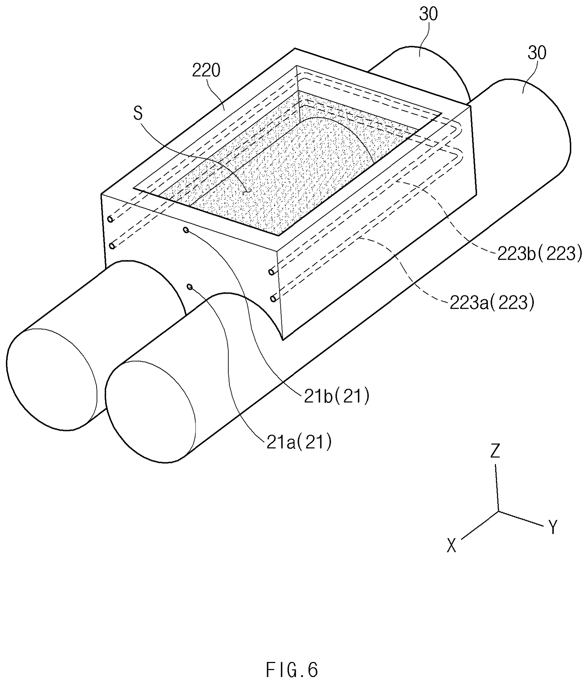

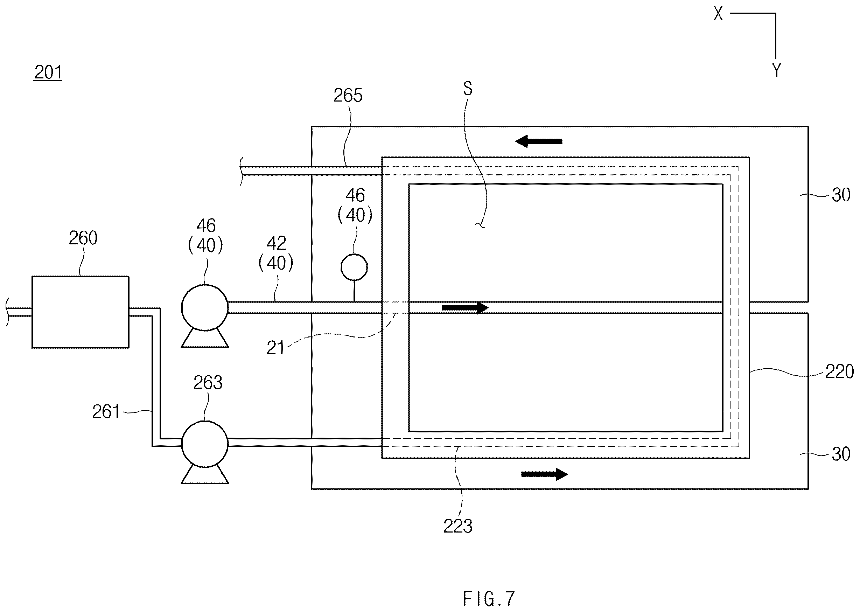

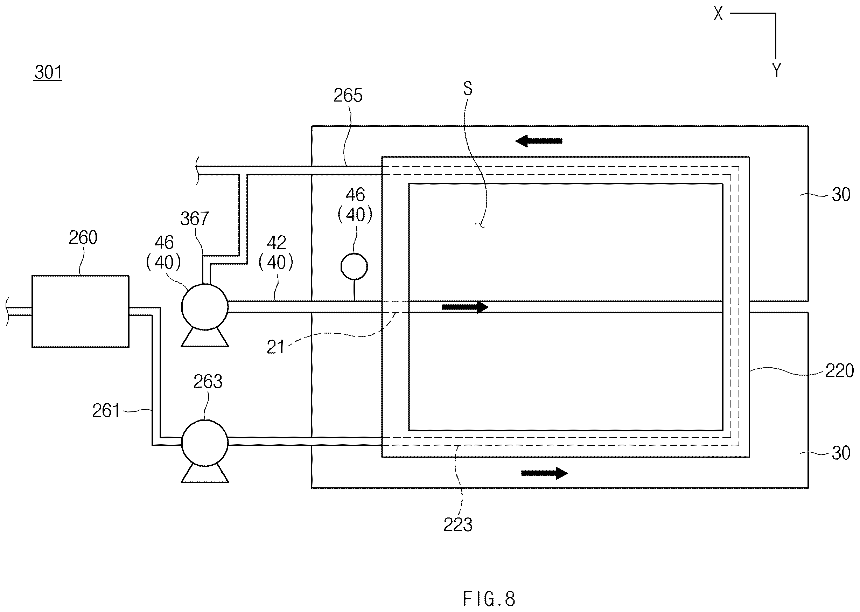

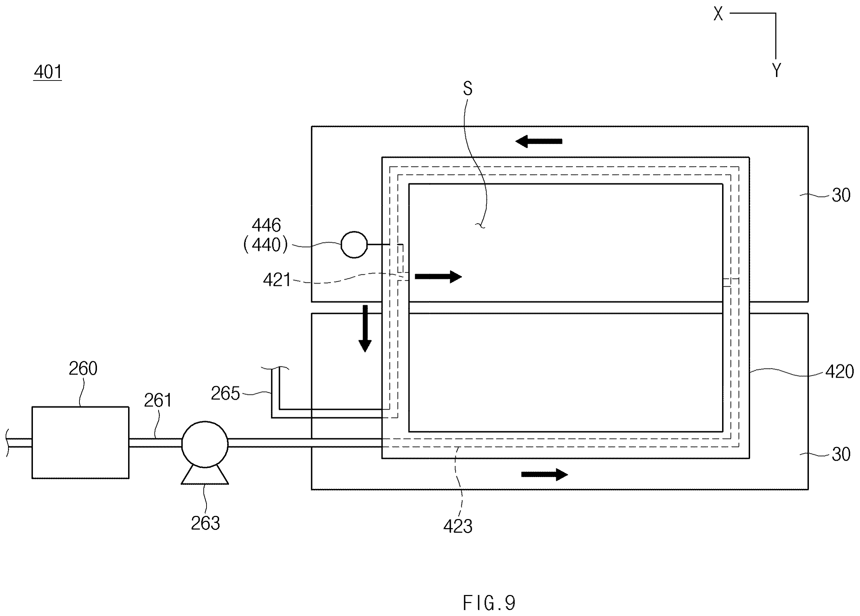

FIG. 5 is a vertical cross-sectional view of a hopper, pressing rollers, and a measuring unit of an electrode sheet manufacturing device according to the second embodiment of the present disclosure being cut so that measuring holes are visible. For the description of the present disclosure, pumps of the measuring unit are shown schematically. FIG. 6 is a perspective view of a hopper and pressing rollers of an electrode sheet manufacturing device according to the third embodiment of the present disclosure as viewed from above. FIG. 7 is a view schematically showing an electrode sheet manufacturing device according to the third embodiment of the present disclosure. FIG. 8 is a view schematically showing an electrode sheet manufacturing device according to the fourth embodiment of the present disclosure. FIG. 9 is a view schematically showing an electrode sheet manufacturing device according to the fourth embodiment of the present disclosure. At this time, each component of the electrode sheet manufacturing device according to another embodiment of the present disclosure is schematically shown in the drawing, and the size of the component, the thickness of the line, and the like may be somewhat exaggerated for convenience of understanding. And, the same reference numerals as in the previously shown drawings refer to the same members performing the same functions.

FIG. 5 discloses a hopper 120, a pressing roller 30, and a measuring unit 140 of the manufacturing device according to the second embodiment of the present disclosure. The hopper 120 of the manufacturing device according to the second embodiment of the present disclosure may be provided with one measuring hole 121.

And, the measuring unit 140 of the manufacturing device according to this embodiment may include a flow path forming member 142 connected to the measuring hole 121, a pressure sensor 144 for measuring the pressure of the fluid flowing through the flow path forming member 142, and a pump 146 that injects a predetermined fluid (e.g., external air) into the flow path forming member 142.

At this time, in this embodiment, the measuring hole 121 may be positioned adjacent to the boundary L of the first region A and the second region B of the inner peripheral surface of the hopper 20. For example, the measuring hole 121 may be positioned at the boundary L.

Through this configuration, the amount of powder accommodated in the hopper 20 and the reference amount may be compared with each other in this embodiment. For example, if the pressure of the measuring hole 121 is measured as atmospheric pressure, it may be determined that the amount of powder accommodated in the hopper 20 is less than the reference amount. Alternatively, if the pressure of the measuring hole 121 is measured as the pressure by the powder, it may be determined that the amount of powder accommodated in the hopper 20 is more than the reference amount.

In this way, the operation of the pressing roller 30 or the powder supply unit may be controlled based on the information obtained by the measuring unit 140, which may be the same as described in the manufacturing device 1 (shown in FIG. 1) according to the first embodiment of the present disclosure

As such, the manufacturing device according to the second embodiment of the present disclosure may compare the amount of powder accommodated in the hopper 20 with the reference amount using one measuring hole 121 and the measuring unit 140, and may stably manufacture an electrode sheet based on this. Therefore, according to this embodiment, a compact manufacturing device having a simpler structure may be provided.

FIGS. 6 and 7 disclose a manufacturing device according to the third embodiment of the present disclosure. Referring to FIGS. 6 and 7, a hopper 220 of the manufacturing device 201 according to the third embodiment of the present disclosure may be provided with a receiving space S. The receiving space S may be a space for accommodating powder.

At this time, in this embodiment, an internal flow path 223 may be provided inside the hopper 220. The internal flow path 223 may be a flow path through which a heating fluid to be described later passes. Through this, thermal energy of the heating fluid may be transferred to the receiving space S of the hopper 220, thereby heating the powder.

In this embodiment, the internal flow path 223 may extend along the peripheral direction of the receiving space S. This may be to increase the heat transfer area between the internal flow path 223 and the receiving space S. The internal flow path 223 may be formed through side walls constituting the hopper 220.

At this time, to further increase the heat transfer area, the internal flow path 223 may be configured in plurality. As shown, the internal flow path 223 may include a first internal flow path 223a and a second internal flow path 223b. The first and second internal flow paths 223a, 223b may extend side by side with each other along the perimeter of the receiving space S. The number and extension direction or arrangement of the internal flow paths 223 may be appropriately modified as necessary.

Meanwhile, the manufacturing device 201 according to the third embodiment of the present disclosure may further include a heating fluid supply unit 260. The heating fluid supply unit 260 may be a unit for supplying a fluid heated to a predetermined temperature. At this time, the temperature may be 80 to 110 degrees. This may be because the target heating temperature of the powder is 80 to 110 degrees. This temperature of the heating fluid may be appropriately set, considering the target heating temperature of the powder, the heat transfer rate between the internal flow path 223 and the receiving space S, and the like.

In this embodiment, the heating fluid supply unit 260 may be a tank in which the heating fluid is accommodated. Alternatively, the heating fluid supply unit 260 may be composed of a tank in which a predetermined fluid (e.g., air) is accommodated and a heater that heats the fluid accommodated in the tank. Alternatively, the heating fluid supply unit 260 may be composed of a pipe (or duct) through which a predetermined fluid passes and a heater that is provided in the pipe and heats the fluid passing therethrough. The structure of the heating fluid supply unit 260 is not particularly limited as long as it may supply a heating fluid.

Meanwhile, in this embodiment, a flow path member for supplying heating fluid 261 may be connected to the heating fluid supply unit 260. The flow path member for supplying heating fluid 261 may connect the heating fluid supply unit 260 and the internal flow path 223. At this time, a heating fluid transfer pump 263 for assisting in transferring the heating fluid may be provided in the flow path member for supplying heating fluid 261.

Meanwhile, a flow path member for supplying heating fluid 261 and a flow path member for discharging heating fluid 265 may be connected to one side and the other side of the internal flow path 223. The flow path member for discharging heating fluid 265 may be configured to discharge the heating fluid heat-exchanged while passing through the internal flow path 223.

At this time, in this embodiment, the flow path member for supplying heating fluid 261 may be configured to supply the heating fluid to the pump 46 of the measuring unit 40 (hereinafter, referred to as a measuring fluid transfer pump). To this end, a portion of the flow path member for supplying heating fluid 261 may be branched off from another portion and connected to the measuring fluid transfer pump 46.

By this configuration, the fluid supplied to the receiving space S of the hopper 220 by the measuring unit 40 may also be a heating fluid heated to a predetermined temperature. The fluid injected into the hopper 220 may perform not only the function of measuring the capacity of the powder but also the function of heating the powder. Accordingly, the heating action of the powder by the heating fluid may be effectively performed.

FIG. 8 discloses a manufacturing device according to the fourth embodiment of the present disclosure. Referring to FIG. 8, in the manufacturing device 301 according to the fourth embodiment of the present disclosure, the heating fluid discharged from the internal flow path 223 may be supplied to the measuring fluid transfer pump 46.

To this end, a portion 367 of the flow path member for discharging heating fluid 265 may be branched off from another portion and connected to the measuring fluid transfer pump 46. By this configuration, all of the heating fluid supplied from the heating fluid supply unit 260 may exchange heat while passing through the internal flow path 223. And, some of the heating fluid heat-exchanged may be recycled to determine the capacity of the powder in the measuring unit 40.

FIG. 9 discloses a manufacturing device according to the fifth embodiment of the present disclosure. Referring to FIG. 9, in the manufacturing device 401 according to the fifth embodiment of the present disclosure, the internal flow path 423 of the hopper 420 may be configured to surround the receiving space S in a peripheral direction. As a result, the heat exchange area between the internal flow path 423 and the receiving space S may be increased. Additionally, the manufacturing device 401 may be configured in a more compact and simple structure.

At this time, in this embodiment, the measuring hole 421 may be branched off from a portion of the internal flow path 423. The opening of the measuring hole 421 may be provided only on an inner wall of the receiving space S. That is, the measuring hole 421 may be open only toward the receiving space S and may not be open to the outside. As a result, some of the heating fluid flowing through the internal flow path 423 may be injected into the receiving space S.

At this time, the heating fluid injected into the receiving space S may be used to determine the capacity of the powder. To this end, the pressure sensor 46 may be configured such that at least a portion thereof is provided inside the hopper 420 to measure the pressure of the measuring hole 421. Meanwhile, the heating fluid may also perform the function of directly heating the powder accommodated in the receiving space S.

Meanwhile, in this embodiment, the measuring hole 421 is branched off from a section located at the rear end based on a direction in which the heating fluid is transferred in the internal flow path 423. However, a position at which the measuring hole 421 is branched is not particularly limited. For example, the measuring hole 421 may be branched off from a section located at the front end. At this time, the front end and the rear end of the internal flow path 423 may refer to a part located at the front end and a part located at the rear end, respectively, from the central point of the internal flow path 423.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1, 101, 201, 301, 401: Electrode sheet manufacturing device
10: Supply unit
20, 120, 220, 420: Hopper
30: Pressing roller
40, 140, 440: Measuring unit
50: Controller
260: Heating fluid supply unit
P: Powder
E: Electrode sheet
S: Receiving space

## Claims

1. An electrode sheet manufacturing device, comprising:
a pressing roller capable of manufacturing an electrode sheet by pressing powder;
a hopper configured to supply powder accommodated therein toward the pressing roller and having at least one measuring hole; and
a measuring unit configured to measure pressure inside the hopper by injecting a predetermined fluid into the measuring hole in order to measure the amount of powder accommodated in the hopper.

2. The electrode sheet manufacturing device according to claim 1,
wherein the predetermined fluid is external air of the hopper.

3. The electrode sheet manufacturing device according to claim 1,
wherein the measuring unit comprises:
a flow path forming member having one side connected to the measuring hole; and
a pressure sensor that measures pressure of a fluid flowing through the flow path forming member.

4. The electrode sheet manufacturing device according to claim 1,
wherein the measuring hole is formed through the hopper to allow the inside and the outside of the hopper to communicate with each other.

5. The electrode sheet manufacturing device according to claim 1,
wherein at least a portion of the measuring unit is installed on an outer surface of the hopper.

6. The electrode sheet manufacturing device according to claim 1,
wherein the measuring hole comprises a first measuring hole and a second measuring hole spaced apart from each other.

7. The electrode sheet manufacturing device according to claim 6,
wherein the pressing rollers are configured as a pair,
wherein one of the first measuring hole and the second measuring hole is positioned between the pair of pressing rollers, and
the other of the first measuring hole and the second measuring hole is disposed at a predetermined distance from the pair of pressing rollers.

8. The electrode sheet manufacturing device according to claim 1, further comprising:
a powder supply unit that supplies powder to the hopper; and
a controller that controls the powder supply unit based on information obtained by the measuring unit.

9. The electrode sheet manufacturing device according to claim 1, further comprising:
a controller that controls operation of the pressing roller based on information obtained by the measuring unit.

10. The electrode sheet manufacturing device according to claim 9,
wherein the controller is configured to change an operating state of the pressing roller when the amount of powder accommodated in the hopper is less than a reference amount, and
an inner peripheral surface of the hopper comprises:
a first region in contact with the reference amount of powder accommodated inside the hopper; and
a second region located on the opposite side of the pair of pressing rollers based on the first region,
wherein at least one of the measuring holes is located in the first region.

11. The electrode sheet manufacturing device according to claim 10,
wherein at least one of the measuring holes is formed at a position where it may be blocked by the reference amount of powder accommodated inside the hopper.

12. The electrode sheet manufacturing device according to claim 10,
wherein at least one of the measuring holes is located adjacent to a boundary between the first region and the second region.

13. The electrode sheet manufacturing device according to claim 10,
wherein the pressing rollers are configured as a pair, and
when the amount of powder accommodated in the hopper is less than the reference amount, the controller stops the operation of the pressing rollers, increases a distance between the pair of pressing rollers, or lowers the pressure at which the pressing rollers press the powder.

14. The electrode sheet manufacturing device according to claim 1,
wherein the fluid injected into the hopper by the measuring unit is a heating fluid heated to 80 degrees or higher.

15. The electrode sheet manufacturing device according to claim 14,
wherein the hopper is provided with a receiving space for accommodating powder, and
an internal flow path extending in a peripheral direction of the receiving space is provided inside the hopper to allow a predetermined fluid to flow,
wherein a portion of the heating fluid is configured to be injected into the hopper by the measuring unit, and
a remaining portion of the heating fluid is configured to be supplied to the internal flow path.

16. The electrode sheet manufacturing device according to claim 1,
wherein the hopper is provided with a receiving space for accommodating powder, and
an internal flow path extending in a peripheral direction of the receiving space is provided inside the hopper to allow a predetermined fluid to flow,
wherein the heating flow path is configured to be supplied with a heating fluid heated to 80 degrees or higher.

17. The electrode sheet manufacturing device according to claim 16,
wherein the internal flow path is composed of a plurality of internal flow paths.

18. The electrode sheet manufacturing device according to claim 17,
wherein the plurality of internal flow paths extend side by side with each other along the peripheral direction of the receiving space.

19. The electrode sheet manufacturing device according to claim 16,
wherein the measuring unit is configured to inject at least a portion of the heating fluid discharged from the internal flow path into the measuring hole.

20. The electrode sheet manufacturing device according to claim 16, further comprising:
a heating fluid supply unit for supplying the heating fluid.
